(19) Europäisches Patentamt / European Patent Office / Office européen des brevets

(11) **EP 3 968 014 A1**

(12) **EUROPEAN PATENT APPLICATION**

(43) Date of publication:
**16.03.2022 Bulletin 2022/11**

(21) Application number: **21190495.8**

(22) Date of filing: **10.08.2021**

(51) International Patent Classification (IPC):
**G01N 23/2055** (2018.01)   **G01N 23/20025** (2018.01)

(52) Cooperative Patent Classification (CPC):
**G01N 23/2055; G01N 23/20025;** G01N 2223/0566;
G01N 2223/309; G01N 2223/3306;
G01N 2223/3308; G01N 2223/63

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2020 GB 202014235**

(71) Applicant: **Rolls-Royce plc
London N1 9FX (GB)**

(72) Inventors:
• **Bing, Graham
  Derby, DE24 8BJ (GB)**
• **Solanki, Riten
  Derby, DE24 8BJ (GB)**
• **Short, Owen
  Derby, DE24 8BJ (GB)**
• **Byrne, Chris
  Derby, DE24 8BJ (GB)**

(74) Representative: **Rolls-Royce plc
Intellectual Property Dept SinA-48
PO Box 31
Derby DE24 8BJ (GB)**

(54) **SYSTEM AND METHOD OF MEASURING GRAIN ORIENTATIONS**

(57) A system (100) and a method (200) of measuring grain orientations of a metal component (102). The method (200) includes defining a series of measurement locations on the metal component (102) at which to take a series of measurements indicative of grain orientations at corresponding measurement locations. The method (200) further includes defining a nominal grain orientation at each measurement location. The method (200) further includes loading the measurement locations into a computer-controllable fixture (104) suitable for positioning the metal component (102). The method (200) further includes locating the metal component (102) in the computer-controllable fixture (104). The method (200) further includes taking the series of measurements at the series of measurement locations. The method (200) further includes analysing the measurement at each measurement location relative to the nominal grain orientation at the corresponding measurement location.

*FIG. 6*

EP 3 968 014 A1

**Description**

FIELD OF THE DISCLOSURE

The present disclosure concerns an apparatus, and in particular an apparatus for measurement of metallurgical grain orientations of metal components.

BACKGROUND

In gas turbine engines, turbine blades are frequently subjected to high temperatures and high mechanical loads resulting from their rotation speed. Under these conditions, a turbine blade which is cast using a conventional casting method may typically have a polycrystalline microstructure. At high temperatures and high mechanical loads, crystals in the polycrystalline microstructure can slide against each other, resulting in creep. To address this problem, casting methods are generally modified so that the crystalline structure of the turbine blade has grain boundaries that are parallel to the direction of the centrifugal loading on the turbine blade when the gas turbine engine is in operation. In other words, turbine blades are generally cast so that elongate metal crystals that run from the root to the tip of the turbine blade are formed.

In some cases, the elongate crystalline microstructure has been eliminated altogether, resulting in turbine blades which are formed of a single metal crystal with no grain boundaries at all. Due to the absence of grain boundaries, creep performance is improved. In addition to turbine blades being cast as a single metal crystal, the crystal orientation may also be subject to careful control because the single crystal is more resistant to creep in some crystal orientations than others.

Therefore, it has been known to cast single crystal components with tight control of the crystal orientation. In order to achieve the tight orientation control, a metal seed may be used. By carefully controlling the casting process, molten metal in a casting mould is allowed to come into contact with the metal seed, and a single metal crystal grows from the metal seed as the metal solidifies. The resulting component may therefore have substantially the same crystal orientation as the metal seed and, by carefully controlling the crystal orientation of the metal seed, the crystal orientation of the cast component may also be controlled.

When bonding together two such single-crystal components, it may be vital that the two crystals are aligned to within a few degrees. If deviation between alignment of the two crystals is too great, there may be a line of weakness at join which would make the final component vulnerable to splitting/breaking at the join. Thus, when joining together large single crystal pieces, or dividing a large single piece into multiple smaller pieces for separate joins, multiple measurements of grain orientations need to be made in order to ensure that the grain orientation is known at each location where a join between two or more pieces is to be made.

Several grain orientation measurement methods are currently used. One such grain orientation measurement method is back-reflection Laue method. A casting is located on standard aerofoil locations so that it aligns to datum planes, and a grain orientation measurement is taken at a discrete point on a flat face on a root end. In this way the grain orientation measurement is aligned to the dimensional axes. A distance between an X-ray source and a surface to be measured is fixed, as are the angles of incidence and reflection, enabling a reading to be taken.

Ordinarily, a single crystal part arrives for testing with a defined reference direction and a plane which is used to measure the crystal orientation for the whole piece. Bonded single crystal parts however have a far tighter grain orientation requirement, driven by the need to bond two parts together with minimal grain orientation mismatch. Therefore, knowing how the grain orientations vary across the component may be important. A single cast component may have its grain orientation measured in several locations on a small quantity of parts, to gain the most detailed understanding, and remaining parts may be measured in one or a few locations. After each measurement, the cast component may have to be removed from a fixture and the fixture positioned for the next measurement. The cast component may be then mounted on the fixture for the next measurement. This process may require substantial time and effort.

Therefore, existing methods may require substantial time and effort to make such measurements. Thus, an improved system and method for measurement of grain orientations is required.

SUMMARY

According to a first aspect there is provided a method of measuring grain orientations of a metal component. The method includes defining a series of measurement locations on the metal component at which to take a series of measurements indicative of grain orientations at corresponding measurement locations. Each measurement may be indicative of a nominal grain orientation for a given measurement location and viewing vector. The method further includes defining a nominal grain orientation at each measurement location. The method further includes loading the measurement locations into a computer-controllable fixture suitable for positioning the metal component. The method further includes locating the metal component in the computer-controllable fixture. The method further includes taking the series of measurements at the series of measurement locations. The method further includes analysing the measurement at each measurement location relative to the nominal grain orientation at the corresponding measurement location.

The method of measuring grain orientations provided in the present disclosure may substantially reduce time and effort required to record grain orientations. Further, the method may allow for feasibility of taking a large number of observations in manageable time intervals. This may make sure appropriate calculations and observations are always made before taking a manufacturing step, thereby ensuring quality standards. This may, in turn, reduce scrap production, enhance productivity and minimize costs.

In some embodiments, the nominal grain orientation is defined based on a viewing attitude at each measurement location. The viewing attitude may change at each measurement location. In order to obtain accurate grain orientation, change in viewing attitude may have to be accounted for while measuring grain orientation at each measurement location.

In some embodiments, taking the series of measurements further includes recording the series of measurements. It may be necessary to record the measurements for further analysis. It may also be necessary to record the measurements to ensure accountability of the measured data.

In some embodiments, analysing the measurement at each measurement location further includes determining a difference between the measurement at each measurement location and the nominal grain orientation at the corresponding measurement location, and comparing the difference with a threshold difference.

In some embodiments, the threshold difference is an angle of 10 degrees.

In some embodiments, analysing the measurement at each measurement location further includes fitting a Laue pattern mask to the measurement. This may allow ease of calculation for further steps in the process.

For each measurement location, nominal grain orientation may be equivalent to an expected grain orientation value. Difference between the measurement and the nominal grain orientation may depict a deviation in grain orientation from the expected value at a measurement location. Further, the threshold difference may depict maximum allowable deviation from the expected value. If the difference is lower than the threshold, no further remedial steps may need to be taken.

In some embodiments, the method further includes irradiating the metal component with an X-ray beam using an X-ray source at each measurement location.

In some embodiments, the method further includes detecting diffracted X-rays from each measurement location on the metal component using an X-ray detector.

In some embodiments, the method further includes moving the component via the computer-controllable fixture to each measurement location. Movement via the computer-controllable fixture may ensure precise positioning of the metal component.

In some embodiments, moving the component further includes translating the metal component along one or more axes such that a distance between the X-ray source, each measurement location on the metal component and the X-ray detector is substantially constant. Movement through the computer-controllable fixture may ensure precise translational movements along the one or more axes while maintaining the fixed distances.

In some embodiments, moving the component further includes rotating the metal component about one or more planes such that a normal to a surface of the metal component at each measurement location subtends a substantially constant angle at the X-ray source. Movement through the computer-controllable fixture may ensure precise translational movements along the one or more axes while maintaining the fixed angle.

In some embodiments, the computer-controllable fixture is a six-axis computer-controllable fixture. Such a six-axis arrangement may ensure precise movements as well as providing directional flexibility to the movements of the metal component on the computer-controllable fixture. Further, repeatability and accuracy of the process may be enhanced.

According to another aspect of the present disclosure, a system for measuring grain orientations of a metal component is provided. The system has a computer-controllable fixture for positioning the metal component and a controller. The controller is configured to receive a series of measurement locations on the metal component at which to take a series of measurements indicative of grain orientations at corresponding measurement locations. The controller is further configured to define a nominal grain orientation at each measurement location. The controller is further configured to load the measurement locations into a computer-controllable fixture suitable for positioning the metal component. The controller is further configured to locate the metal component in the computer-controllable fixture. The controller is further configured to take a series of measurements at the series of measurement locations. The controller is further configured to analyse the measurement at each measurement location relative to the nominal grain orientation at the corresponding measurement location.

In some embodiments, the system has an X-ray source for irradiating the metal component with an X-ray beam at each measurement location, and an X-ray detector for detecting diffracted X-rays from each measurement location on the metal component.

In some embodiments, the computer-controllable fixture is a six-axis computer-controllable fixture.

In some embodiments, the metal component may be used in a gas turbine engine. For example, the metal component may be at least a part of a turbine blade.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 $Nkg^{-1}s$, 105 $Nkg^{-1}s$, 100 $Nkg^{-1}s$, 95 $Nkg^{-1}s$, 90 $Nkg^{-1}s$, 85 $Nkg^{-1}s$ or 80 $Nkg^{-1}s$. The specific thrust may be in an inclusive range bounded by any two of the values in the previous sentence (i.e. the values may form upper or lower bounds), for example in the range of from 80 $Nkg^{-1}s$ to 100 $Nkg^{-1}s$, or 85 $Nkg^{-1}s$ to 95 $Nkg^{-1}s$. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance-between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

BRIEF DESCRIPTION OF THE DRAWINGS

Embodiments will now be described by way of example only, with reference to the Figures, in which:

Figure 1 is a sectional side view of a gas turbine engine;

Figure 2 is a close-up sectional side view of an upstream portion of a gas turbine engine;

Figure 3 is a partially cut-away view of a gearbox for a gas turbine engine;

Figure 4 is a block diagram of a system for measuring grain orientations of a metal component;

Figure 5 is a schematic perspective view of an exemplary system for measuring grain orientations;

Figure 6 is a schematic perspective view of the system shown in FIG. 5 showing a metal component positioned for measurement;

Figure 7A is a schematic perspective view showing measurement at a first measurement location of the metal component;

Figure 7B is a schematic perspective view showing measurement at a second measurement location of the metal component; and

Figure 8 is a flowchart of a method of measuring grain orientations of a metal component.

Aspects and embodiments of the present disclosure will now be discussed with reference to the accompanying Figures. Further aspects and embodiments will be apparent to those skilled in the art.

DETAILED DESCRIPTION

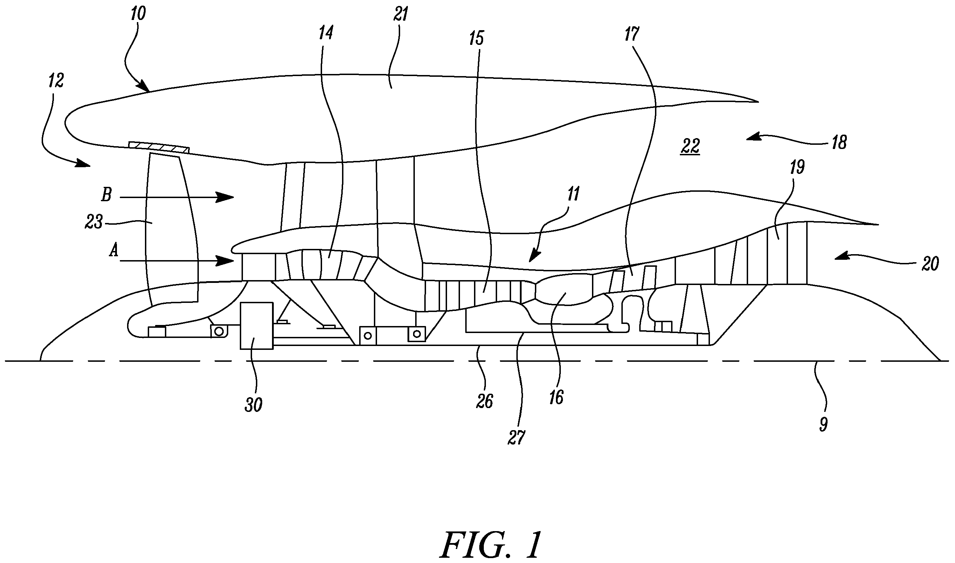

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

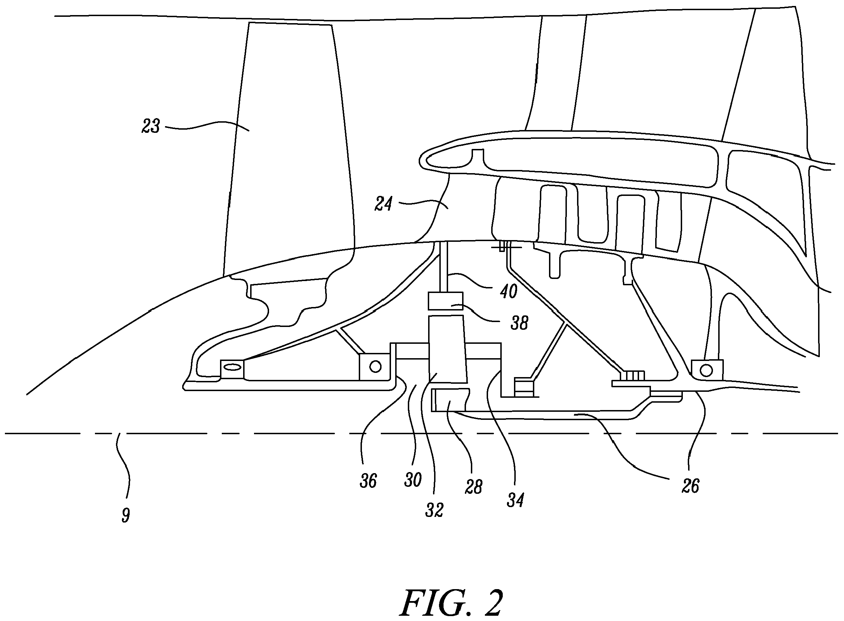

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

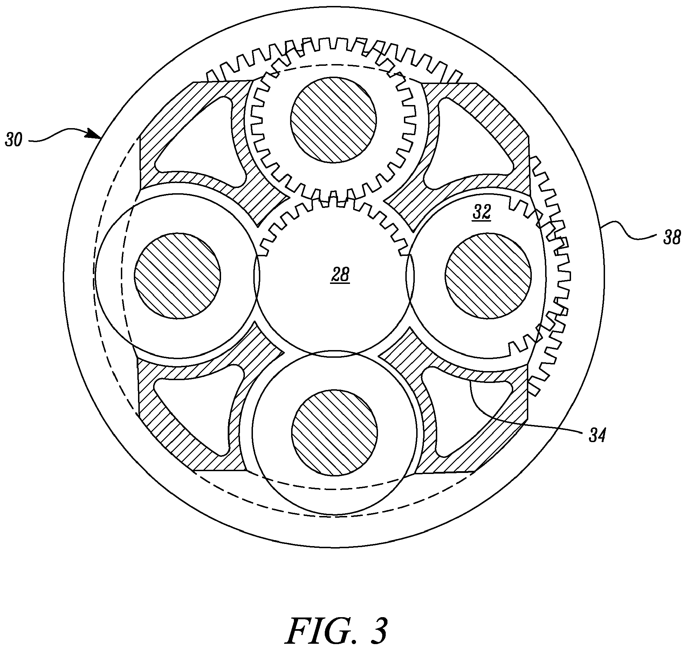

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Due to the high temperatures and the high mechanical loads to which turbine blades are subjected, single crystal casting with tight orientation control may be used to produce turbine blades. It should be noted that single crystal casting with tight orientation control can also be used to produce other components that are subjected to high temperatures and high mechanical loads.

In single crystal casting, the crystal orientation of the resulting component is controlled by a metal seed, which has a crystal orientation close to a nominal orientation.

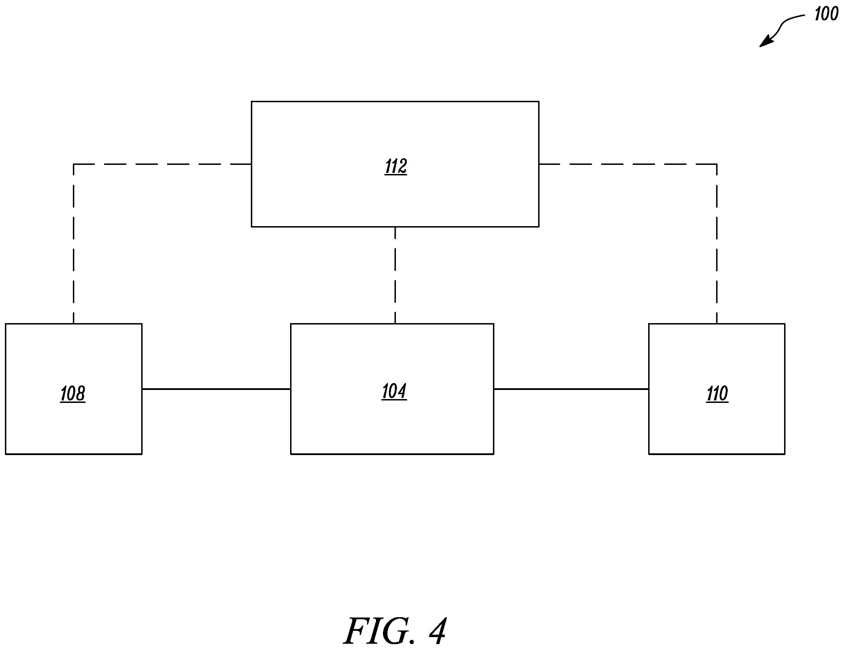

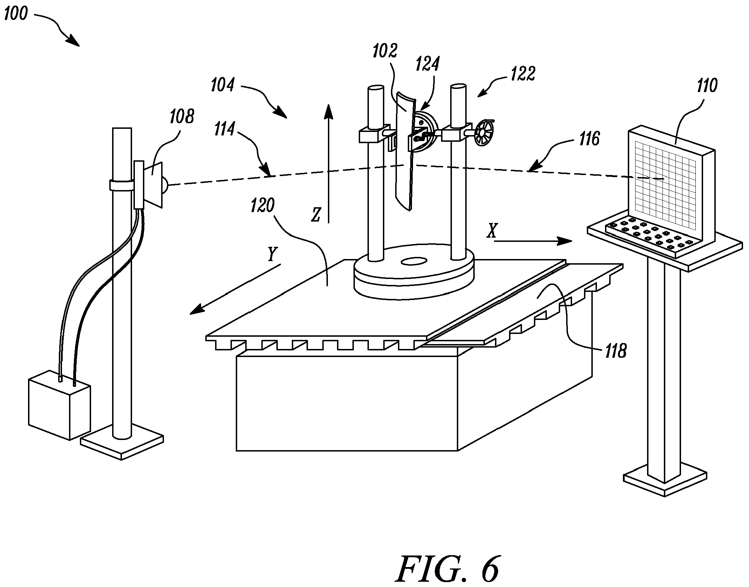

Figure 4 illustrates a block diagram of a system 100 for measuring grain orientations of a metal component 102 (shown in FIG. 6). In some embodiments, the metal component 102 may be an aerofoil. The system 100 includes a computer-controllable fixture 104 for positioning the metal component 102. The computer-controllable fixture 104 may be configured to automatically locate, position, move and fix the metal component 102 associated with the computer-controllable fixture 104. Further, the computer-controllable fixture 104 may be configured to calculate three-dimensional (3-D) coordinates of the metal component 102 at all possible locations at which the metal component 102 may be positioned. In some embodiments, the computer-controllable fixture 104 is a six-axis computer-controllable fixture. The metal component 102 may be suitably positioned on the computer-controllable fixture 104 as per application requirements.

The system includes an X-ray source 108 for irradiating the metal component 102 and an X-ray detector 110 for detecting diffracted X-rays. The X-ray source 108 and the X-ray detector 110 may be of any suitable type which may be compatible with application requirements pertaining to the present disclosure. The present idea is not limited by type of the X-ray source 108 and the X-ray detector 110 in any manner.

The system 100 further includes a controller 112. The controller 112 may be communicably coupled with the computer-controllable fixture 104, the X-ray source 108 and the X-ray detector 110. The controller 112 may control various functional aspects of the computer-controllable fixture 104, the X-ray source 108 and the X-ray detector 110.

The controller 112 of the system 100 may include a processor (not shown) and a memory (not shown). The memory may include computer executable instructions that are executable by the processor to perform a logic associated with the controller 112. In an example, the controller 112 may include analog-to-digital converters to process the signals from the various components of the system 100.

The processor and the memory may be in communication with each other. The processor may be in communication with additional components. The processor may be in communication with a user interface (not shown) that may indicate to an operator grain orientation measurements and related analysis. In some embodiments, the processor may also receive inputs from the operator via the user interface. The controller 112 may control various parameters of the system 100 based on the inputs received from the operator.

The processor may be any device that performs logic operations. The processor may include a general processor, a central processing unit, an application specific integrated circuit (ASIC), a digital signal processor, a field programmable gate array (FPGA), a digital circuit, an analog circuit, a controller, a microcontroller, any other type of processor, or any combinations thereof. The processor may include one or more components operable to execute computer executable instructions or computer code embodied in the memory.

Some of the features of the controller 112 may be stored in a computer readable storage medium (for example, as logic implemented as computer executable instructions or as data structures in memory). All or part of the controller 112 and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device.

A network interface (not shown) may facilitate communication of the controller 112 with a packet-based network, such as a local area network. Additionally, peripheral interfaces (not shown) may be provided. For example, the peripheral interfaces may include RS232 serial interfaces to connect the controller 112 to the other parts of the system 100 to allow control thereof. The peripheral interfaces may further include Universal Serial Bus (USB) interfaces to facilitate connection of human interface devices to the controller 112, along with a Video Graphics Array (VGA) interface to allow connection of a display (e.g., the user interface) to the controller 112.

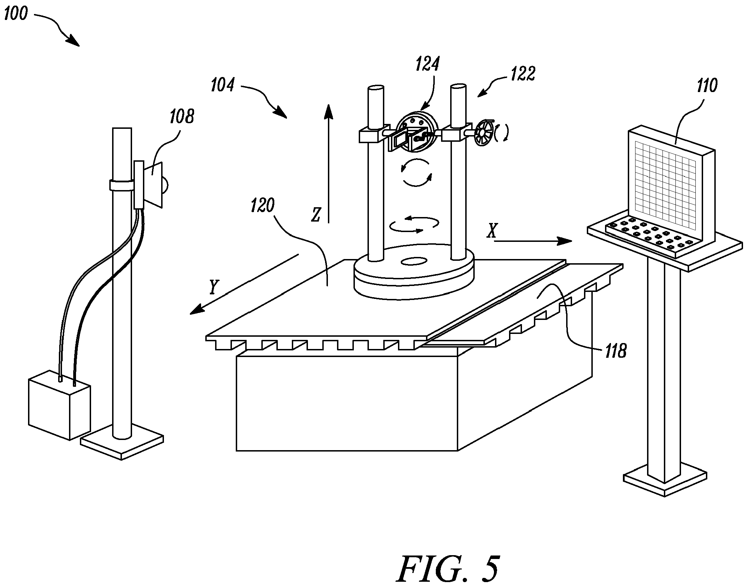

Figure 5 shows various components of the system 100. The X-ray source 108, the X-ray detector 110 and the controller 112 are appropriately placed to make sure measurements are effectively recorded. The system 100 further includes the computer controllable fixture 104. The computer controllable fixture 104 includes a first platform 118, a second platform 120 and a third platform 122. The first platform 118 is adapted to translate along X-axis. The second platform 120 is adapted to translate along Y-axis. Similarly, the third platform 122 is adapted to translate along Z-axis. The third platform 122 further includes a datum location and clamping arrangement 124 to hold the metal component 102. The clamping arrangement 124 may also be adapted to rotate the metal component 102 about X- axis, and Y-axis. Further, the third platform 122 may be adapted to rotate about Z-axis. Thus, the metal component 102 may be placed in any orientation and position in 3-D spatial plane.

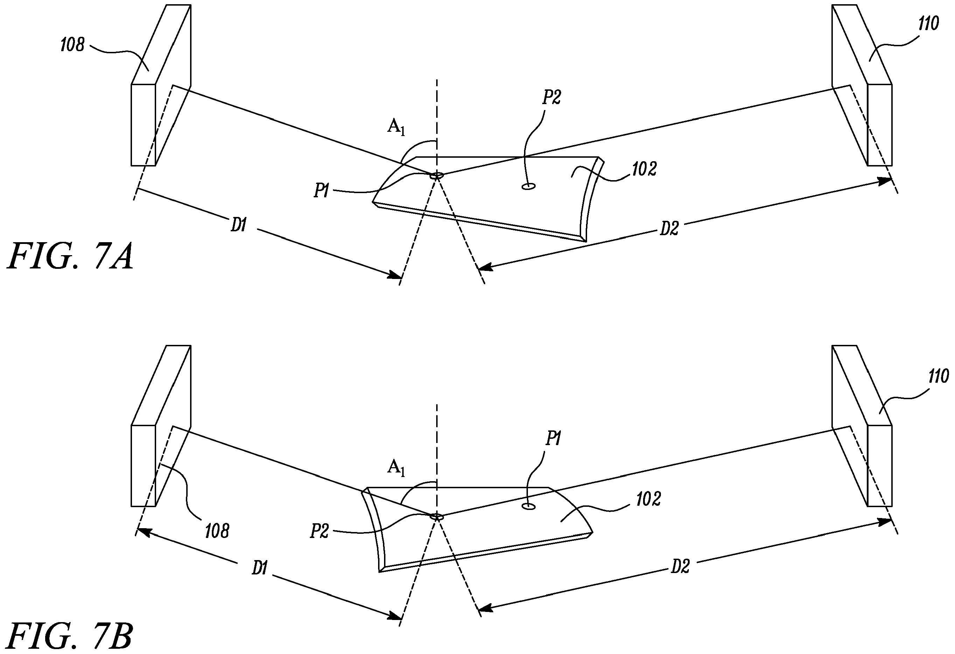

Figure 6 shows the metal component 102 on the computer-controllable fixture 104. The controller 112 may move the metal component 102 via the computer-controllable fixture 104 to various measurement locations. Moving the metal component 102 includes translating the metal component 102 along one or more axes such that a distance between the X-ray source 108, each measurement location on the metal component 102 and the X-ray detector 110 is substantially constant. As shown in Figure 7A, a first measurement location P1 and a second measurement location P2 are defined at the metal component 102. The controller 112 may move the metal component 102 in any suitable manner. The metal component 102 may be placed such that the first measurement location P1 on the metal component 102 is located at a certain spatial location before translational movement. The controller 112 may move the metal component 102 such that the second measurement location P2 on the metal component 102 comes to coordinates of the spatial location of the first measurement location P1 after the translational movement. As illustrated, a distance D1 between the X-ray source 108 and the first measurement location P1 before translational movement remains same as the distance D1 between the X-ray source 108 and the second measurement location P2 after translational movement. Similarly, a distance D2 between the X-ray detector 110 and first measurement location P1 before translational movement remains same as the distance D2 between the X-ray detector 110 and the second measurement location P2 after translational movement.

Further, moving the metal component 102 may also include rotating the metal component 102 about one or more planes such that a normal to a surface of the metal component 102 at each measurement location subtends a substantially constant angle at the X-ray source 108. As shown in Figure 7B, the first measurement location P1 and the second measurement location P2 is defined at the metal component 102. The controller 112 may move the metal component 102 such that the second measurement location P2 on the metal component 102 spatially comes to coordinates of the first measurement location P1 before rotational movement of the metal component 102. Further as illustrated, the normal to the surface of the metal component 102 at the first measurement location P1 before rotational movement and at the second measurement location P2 after rotational movement subtend equal angles A1 at the X-ray source 108.

Further, it should be contemplated that if the measurement position on the metal component 102 is changed through, for example, translation along X and Z axis only, then there is no change observed in resulting observations. However, if the metal component 102 part is moved along the Y axis (i.e., forward and backwards) then the diffracted X-rays will be out of line with the X-ray detector 110. Thus, this distance may have to remain fixed.

Furthermore, if the measurement position is changed to a curved face instead of a flat surface, then the metal component 102 may need to be rotated about appropriate axes so that the new measurement local area is still perpendicular, and adjust the position of the metal component 102 along Y-axis such that the X-ray detector 110 may detect the diffracted X-rays 116. Now, the reading obtained would be in a different viewing axis and may also require automatic selection of a different Laue mask along corresponding viewing axis accordingly. This information may be compared with historical data as well. However, a mathematical transformation is preferably applied to convert the measurement back into a reference system which used initially during part development and design process. It should be noted that this is a crystallographic transformation and not just a geometric transformation. This step may also be carried out through predetermined lookup tables, graphs etc.

With combined reference to Figures 4-6, the controller 112 is configured to receive a series of measurement locations on the metal component 102. The series of measurement locations are defined as locations at which a series of measurements are taken. The series of measurements are indicative of grain orientations at corresponding measurement locations. In some embodiments, the measurement locations may be provided by an engineer or any other personnel involved with the grain orientation measurement process. Measurement locations may be defined as coordinates with respect to reference axes.

When the controller 112 moves the metal component 102 from a first measurement location to a second measurement location, the controller 112 may also define the nominal grain orientation of the metal component 102 at the second measurement location. The controller 112 may already have nominal grain orientation of the metal component 102 at the first measurement location. Knowing the coordinates of the second measurement location, the controller 112 may apply appropriate spatial transformations to the nominal grain orientation at the first measurement location to derive the nominal grain orientation at the second measurement location. For example, comparison between coordinates of the first and second measurement location may provide angular movements. The angular movements may then be split into angular movements along reference axes, which may further be used to derive nominal grain orientation at the second location. Predetermined reference transformation matrices may be provided with the controller 112 which may calculate the value of nominal grain orientation at each measurement location.

It should be contemplated that the above explanation is merely exemplary and various other such transformation methods may be used to determine nominal grain orientation of the metal component 102 at each measurement location.

The controller 112 defines a nominal grain orientation at each measurement location. The nominal grain orientation is defined based on a viewing attitude at each measurement location. The nominal grain orientation at a first measurement location may be defined as a vector N1 provided below.

$$N1 = a1i + a2j + a3k$$

To derive a nominal grain orientation at another measurement location, the controller 112 may calculate a displacement vector through the following exemplary method:

First measurement location: $P1 = x1i + y1j + z1k$

Second measurement location: $P2 = x2i + y2j + z2k$

Displacement vector: $D = (x2-x1)i + (y2-y1)j + (z2-z1)k$

To calculate a nominal grain orientation N2 at the second measurement location P2, the nominal grain orientation N1 at the first location P1 may be clubbed with the displacement vector D:

$$N2 = N1[D]$$

$$N2 = (a1i + a2j + a3k) [(x2-x1)i + (y2-y1)j + (z2-z1)k]$$

The above calculations are provided as an exemplary reference, and any suitable mathematical strategy may be utilized to define the various parameters.

The controller 112 loads the measurement locations into the computer-controllable fixture 104 suitable for positioning the metal component 102. The controller 112 locates the metal component 102 in the computer-controllable fixture 104. The term 'locate', as used herein, refers to positioning the metal component 102 on the computer-controllable fixture 104 such that the controller 112 has exact location coordinates of the metal component 102 along with orientation with respect to the reference axes.

The controller 112 then takes a series of measurements at the series of measurement locations. In some embodiments, taking the series of measurements further comprises recording the series of measurements. The series of measurements are taken with help of the X-ray source 108 and the X-ray detector 110. The controller 112 irradiates the metal component 102 with an X-ray beam 114 using the X-ray source 108 at each measurement location and detects diffracted X-rays 116 from each measurement location on the metal component 102 using the X-ray detector 110. Record of the measurements may be maintained in any suitable format which may be reusable for future references and further calculations and analysis.

After recording the diffracted X-rays by the X-ray detector 110, the controller 112 may select an appropriate Laue pattern mask to fit the recorded diffraction pattern. The Laue pattern mask may be a pre-determined diffraction pattern which may exhibit similar patterns as to recorded diffraction pattern. After matching with a known Laue pattern, appropriate angular transformations may be applied for calculating orientation.

Fitting a known characteristic Laue pattern to the recorded diffraction pattern may include selecting closest Laue pattern from a pre-defined library of Laue patterns corresponding to various crystallographic orientations, and using the known information about the crystallographic orientation to define the crystallographic orientation of the metal component 102 accordingly. This step may provide ease of further calculations and data processing. The controller 112 may have a pre-stored library of various Laue patterns from which the controller 112 may select the one which may be closest to the recorded pattern.

Afterwards, the controller 112 analyses the measurement at each measurement location relative to the nominal grain orientation at the corresponding measurement location. Analysing the measurement at each measurement location further comprises determining a difference between the measurement at each measurement location and the nominal grain orientation at the corresponding measurement location. Further, the difference is compared with a threshold difference. The threshold difference may be defined as a value of difference between the measurement and the nominal grain orientation at a measurement location which will not provide an appropriate strength to the join of the metal component 102 with another metal component (not shown) at a measurement location. The threshold difference will vary depending on the materials involved, but commonly any difference beyond 10 degrees makes for an unacceptably weak bond.

The controller 112 may determine an alternative location of joining the metal component 102 to another metal component (not shown) based on the comparison between the measurement and the nominal grain orientation. For example, if the difference exceeds the threshold difference, then the controller 112 may proceed to determine the alternative location. Alternatively, if the difference does not exceed the threshold difference, the controller 112 may provide a confirmation of proceeding with further steps of the manufacturing process.

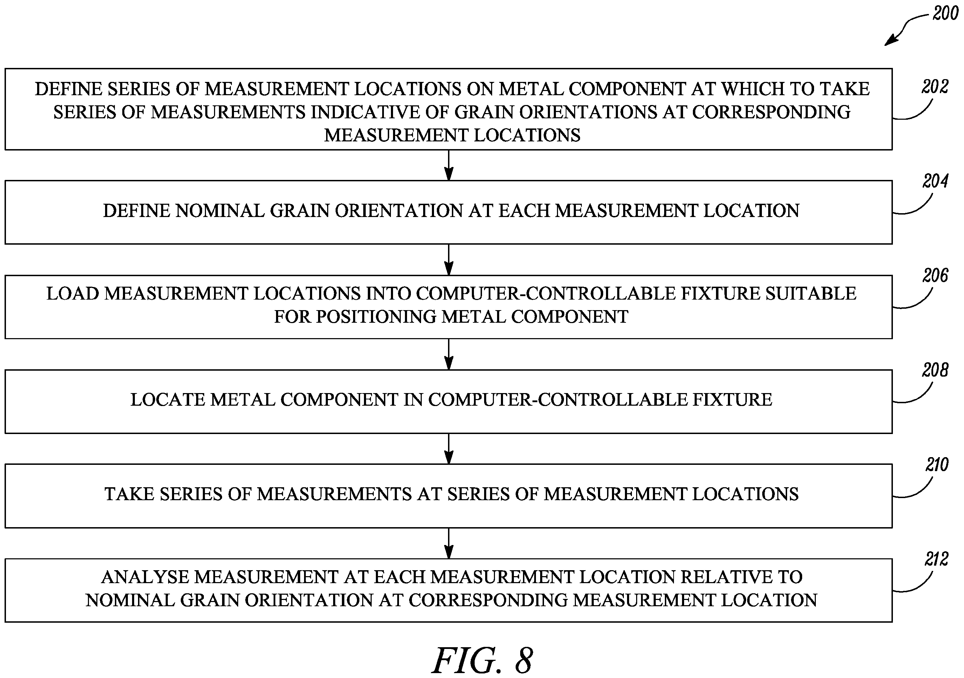

Figure 8 shows a flow chart depicting a method 200 of measuring grain orientations of the metal component 102.

At step 202, a series of measurement locations are defined on the metal component 102 at which to take a series of measurements indicative of grain orientations at corresponding measurement locations.

At step 204, a nominal grain orientation is defined at each measurement location. In some embodiments, the nominal grain orientation is defined based on a viewing attitude at each measurement location.

At step 206, the measurement locations are loaded into the computer-controllable fixture 104 suitable for positioning the metal component 102. The computer-controllable fixture 104 may be a six-axis computer-controllable fixture.

At step 208, the metal component 102 is located in the computer-controllable fixture 104.

At step 210, the series of measurements are taken at the series of measurement locations. In some embodiments, taking the series of measurements further comprises recording the series of measurements.

At step 212, the measurement is analysed at each measurement location relative to the nominal grain orientation at the corresponding measurement location. In some embodiments, analysing the measurement at each measurement location further includes determining a difference between the measurement at each measurement location and the nominal grain orientation at the corresponding measurement location. The method 200 further includes comparing the difference with a threshold difference. In an embodiment, analysing the measurement at each measurement location further includes fitting a Laue pattern mask to the measurement.

In further steps, an alternative location of joining the metal component 102 to another metal component may be determined based on the comparison between the measurement and the nominal grain orientation.

In some embodiments, the method 200 may include irradiating the metal component 102 with an X-ray beam using the X-ray source 108 at each measurement location. The method 200 may further include detecting diffracted X-rays from each measurement location on the metal component 102 using the X-ray detector 110.

In some embodiments, the method 200 may include moving the metal component 102 via the computer-controllable fixture 104 to each measurement location. Moving the metal component 102 may include translating the metal component 102 along one or more axes such that a distance between the X-ray source 108, each measurement location on the metal component 102 and the X-ray detector 110 is substantially constant. Moving the metal component 102 may also include rotating the metal component 102 about one or more planes such that a normal to a surface of the metal component 102 at each measurement location subtends a substantially constant angle at the X-ray source 108.

It should be noted that the present disclosure focuses on a combination of a system 100 including the computer controllable fixture 104, compensation to re-position the metal component 102 to get a reading, automatic selection of a correct Laue pattern mask, and transformation of said reading back to a nominal (based on the exact compensations applied by the movable fixture 104). The present disclosure may eliminate any manual calculation steps. This may allow the present disclosure to be applied in volume production of the metal component 102, which cannot be envisioned through conventional methods.

The present disclosure may be applied to various applications. In one embodiment, the movable fixture 104 may be used for measuring multiple points on the same flat surface, in a single coordinate reference system, e.g., test bar or blade root to tip.

In another embodiment, the present disclosure may be used for measuring multiple points on the metal component 102, where the distance between X-ray source 108 and the metal component 102 changes across the surface and needs to be compensated to get a reading, but the coordinate system does not change.

In another embodiment, the present disclosure may be used for measuring multiple points on a curved surface of the metal component 102, adjusting component rotation to get a reading (for example as shown in FIG. 7), selecting the correct Laue pattern mask, and transforming the results back to the nominal reference system.

The present disclosure may also be used for defining suitable joint areas, for spot or area joining process. Further, the functionality of the present disclosure may be extended to measure multiple pieces in multiple locations, store the data, and match the multiple pieces based on their overall level of grain mismatch, even if they are not measured in exactly the same place. This can be done by the mathematical transformations of either of the halves of the joints.

It will be understood that the disclosure is not limited to the embodiments above-described and various modifications and improvements can be made without departing from the concepts described herein but within the scope of the following claims. For example, instead of lost-wax casting, die casting or sand casting may be used with the present disclosure.

**Claims**

1. A method (200) of measuring grain orientations of a metal component (102), the method (200) comprising:

   defining a series of measurement locations on the metal component (102) at which to take a series of measurements indicative of grain orientations at corresponding measurement locations;
   defining a nominal grain orientation at each measurement location;
   loading the measurement locations into a computer-controllable fixture (104) suitable for positioning the metal component (102);
   locating the metal component (102) in the computer-controllable fixture (104);
   taking the series of measurements at the series of measurement locations; and
   analysing the measurement at each measurement location relative to the nominal grain orientation at the corresponding measurement location.

2. The method (200) of claim 1, wherein the nominal grain orientation is defined based on a viewing attitude at each measurement location.

3. The method (200) of claim 1 or 2, wherein taking the series of measurements further comprises recording the series of measurements.

4. The method (200) of any one of the preceding claims, wherein analysing the measurement at each measurement location further comprises:

   determining a difference between the measurement at each measurement location and the nominal grain orientation at the corresponding measurement location; and
   comparing the difference with a threshold difference.

5. The method (200) of claim 4, wherein the threshold difference is an angle of 10 degrees.

6. The method (200) of any one of the preceding claims, further comprising irradiating the metal component (102) with an X-ray beam (114) using an X-ray source (108) at each measurement location.

7. The method (200) of claim 6, further comprising detecting diffracted X-rays (116) from each measurement location on the metal component (102) using an X-ray detector (110).

8. The method (200) of claim 7, further comprising moving the metal component (102) via the computer-controllable fixture (104) to each measurement location.

9. The method (200) of claim 8, wherein moving the metal component (102) further comprises translating the metal component (102) along one or more axes such that a distance between the X-ray source (108), each measurement location on the metal component (102) and the X-ray detector (110) is substantially constant.

10. The method (200) of claim 9, wherein moving the metal component (102) further comprises rotating the metal component (102) about one or more planes such that a normal to a surface of the metal component (102) at each measurement location subtends a substantially constant angle $A_1$ at the X-ray source (108).

11. The method (200) of claim 1, wherein analysing the measurement at each measurement location further includes fitting a Laue pattern mask to the measurement.

12. The method (200) of any one of the preceding claims, wherein the computer-controllable fixture (104) is a six-axis computer-controllable fixture.

13. A system (100) for measuring grain orientations of a metal component (102), the system (100) comprising:

a computer-controllable fixture (104) for positioning the metal component (102); and
a controller (112) configured to:

receive a series of measurement locations on the metal component (102) at which to take a series of measurements indicative of grain orientations at corresponding measurement locations;
define a nominal grain orientation at each measurement location;
load the measurement locations into a computer-controllable fixture (104) suitable for positioning the metal component (102);
locate the metal component (102) in the computer-controllable fixture (104);
take a series of measurements at the series of measurement locations; and
analyse the measurement at each measurement location relative to the nominal grain orientation at the corresponding measurement location.

14. The system (100) of claim 13, further comprising:

an X-ray source (108) for irradiating the metal component (102) with an X-ray beam (114) at each measurement location; and
an X-ray detector (110) for detecting diffracted X-rays from each measurement location on the metal component (102).

15. The system (100) of claim 13 or 14, wherein the computer-controllable fixture (104) is a six-axis computer-controllable fixture.

*FIG. 1*

EP 3 968 014 A1

FIG. 2

*FIG. 3*

EP 3 968 014 A1

*FIG. 4*

EP 3 968 014 A1

*FIG. 5*

*FIG. 6*

EP 3 968 014 A1

FIG. 7A

FIG. 7B

EP 3 968 014 A1

FIG. 8

Europäisches
Patentamt

European
Patent Office

Office européen
des brevets

# EUROPEAN SEARCH REPORT

**Application Number**

**EP 21 19 0495**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/096302 A1 (SAFRAN [FR]; SAFRAN AIRCRAFT ENGINES [FR] ET AL.) 31 May 2018 (2018-05-31) * figure 3 * * page 3, line 4 * * page 4, line 13 – line 19 * * page 2, line 19 – line 24 * * page 7, line 3 – line 28 * * page 8, line 6 – line 24 * * page 7, line 29 – page 8, line 5 * ----- | 1–15 | INV. G01N23/2055 G01N23/20025 |
| A | GEMPERLOVA J ET AL: "DETERMINATION OF GRAIN MISORIENTATION FROM LAUE PATTERNS", JOURNAL OF PHYSICS D: APPLIED PHYSICS, INSTITUTE OF PHYSICS PUBLISHING, BRISTOL, GB, vol. 28, no. 1, 14 January 1995 (1995-01-14), pages 90-99, XP000495070, ISSN: 0022-3727, DOI: 10.1088/0022-3727/28/1/015 * the whole document * ----- | 1,13 | TECHNICAL FIELDS SEARCHED (IPC) G01N |

The present search report has been drawn up for all claims

| Place of search | Date of completion of the search | Examiner |
|---|---|---|
| Munich | 17 January 2022 | D'Inca, Rodolphe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 19 0495

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2022

| Patent document cited in search report | | Publication date | Patent family member(s) | | Publication date |
|---|---|---|---|---|---|
| WO 2018096302 | A1 | 31-05-2018 | BR 112019010824 | A2 | 01-10-2019 |
| | | | CA 3044925 | A1 | 31-05-2018 |
| | | | CN 110192103 | A | 30-08-2019 |
| | | | EP 3545286 | A1 | 02-10-2019 |
| | | | FR 3059424 | A1 | 01-06-2018 |
| | | | JP 2019536042 | A | 12-12-2019 |
| | | | RU 2019116242 | A | 28-12-2020 |
| | | | US 2020386695 | A1 | 10-12-2020 |
| | | | WO 2018096302 | A1 | 31-05-2018 |

EPO FORM P0459

For more details about this annex : see Official Journal of the European Patent Office, No. 12/82